# EUROPEAN PATENT APPLICATION

(11) **EP 2 527 090 A1**
(43) Date of publication of application: **28.11.2012**
(21) Application number: 12169542.3
(22) Date of filing: 25.05.2012
(51) Int. Cl.: B24D 5/16, B23D 61/02

(54) **Low vibration-type saw blade**

(30) Priority: 25.05.2011 JP 2011129587
(71) Applicant: SANKYO DIAMOND INDUSTRIAL CO., LTD., Kanagawa 243-0417 (JP)
(72) Inventor: Sumida, Norio, Kanagawa, 243-0417 (JP); Sugiura, Kazuya, Japan, 243-0417 (JP)
(74) Representative: Popp, Eugen

(57) **Abstract**

There is provided a low vibration-type saw blade (1) including a circular steel substrate (1-1) having a center hole (1-4) at a central portion thereof, a super abrasive grain layer (1-2) which includes diamond abrasive grains or CBN abrasive grains and is continuously formed to an outer periphery edge of the steel substrate (1-1), and a pair of male and female flanges (2) which are made of a fiber reinforced plastic and have an attachment hole (1-4) to an electric tool spindle at a central portion, and which are integrally provided on a substantial half part of the steel substrate (1-1) in a direction toward an outer periphery thereof through the center hole (1-4) provided at the center portion of the steel substrate (1-1) such that the male and female flanges 82) sandwich the steel substrate (1-1) from both side faces thereof.

## Description

### BACKGROUND OF THE INVENTION

### l. Field of the Invention

The present invention relates to a grinding tool which is appropriately used to cut a variety of building materials such as stone and concrete, and more particularly, to a saw blade having an abrasive grain layer including diamond abrasive grains or CBN (cubic boron nitride sintered body) abrasive grains formed on an outer periphery edge of a circular steel substrate, which is used to cut with high precision a slab plate (flat plate) made of natural rock such as granite, marble and the like, artificial stone such as artificial marble, tile, roofing tile, brick, siding board and the like, rigid synthetic resin such as fiber reinforced plastic (FRP) and carbon fiber reinforced plastic (CFRP), and the like.

### 2. Description of the Related Art

In recent years, a variety of rigid materials as described above have been widely used as building materials, in addition to the various natural rocks and artificial marbles (hereinafter, also referred to as 'stones'). A grinding tool which cuts a material formed of the rigid material into a desired size/shape is classified into a rim-type saw blade where a super abrasive grain layer having super abrasive grains such as diamond abrasive grains or CBN abrasive grains (hereinafter, also simply referred to as 'super abrasive grains') and various binder materials, as main components, is continuously and integrally provided to an outer periphery edge of a disk-shaped steel substrate (hereinafter, also referred to as 'substrate'), and a segment-type saw blade to which super abrasive grain chips including the super abrasive grains and various binder materials are spaced and intermittently combined at a predetermined interval via key recesses or U-shaped recesses provided on an outer periphery edge of a steel substrate. The grinding tool is widely used depending on respective utilities. In the meantime, the saw blade is also referred to as a diamond cutter or simply cutter among skilled artisan in the art. In general, the saw blade is fitted and engaged to a spindle of a portable rotary electric tool such as grinder and sander with being orthogonal to a shaft center and is then provided for a manual operation such as cutting process. However, as the portable electric tool is rotated at high speed, the saw blade is vibrated and hand movement is thus caused. As a result, a burden of the operator is increased and the cut speed performance of the saw blade is lowered, so that the processing precision is deteriorated.

In order to suppress the vibration of the saw blade accompanied by the high-speed rotation of the portable electric tool and thus to reduce the burden of the operator and to keep the cut speed performance, a variety of suggestions have been made. For example, a saw blade is suggested in which a plurality of steel disks are used as a substrate of the saw blade, and the steel disk is configured by a sintering of a super abrasive grain layer and a spot welding between the disks, and the rigidity of a base metal (substrate) is kept to suppress the vibration, thereby reducing noise generation (for example, refer to JP-B-3,299,490). Also, a diamond cutter is suggested in which a shallow recess having a doughnut shape is concentrically provided with a super abrasive grain layer, which is provided on an outer periphery edge of a substrate, at an inner side of the super abrasive grain layer, thereby preventing the rubbing (so-called body rubbing) between the substrate and a cutting object material and suppressing vibration of the substrate (for example, refer to JP-A-2003-80464). Also, a diamond cutter capable of cutting a rigid material such as porcelain tile with high precision is suggested in which a thickness of a substrate adjacent to a super abrasive grain layer, which is provided on an outer periphery edge of the substrate, is made to be thinner, compared to the super abrasive grain layer, and a thickness of the substrate at a central part thereof, which does not reach a cutting depth for a cutting object material, is made to be thicker than the super abrasive grain layer, so that the rigidity of the substrate is secured to suppress the vibration of the substrate and to enable the precise cutting (for example, refer to JP-A-2002-205274).

In the above technique, the saw blade disclosed in JP-B-3,299,490is a segment-type saw blade where the super abrasive grain layer is intermittently provided to the outer periphery edge by the notch recesses provided on the outer periphery edge of the circular substrate. The substrate has such a specific structure that steel disks having smaller diameters than a central circular disk are joined on both sides of the circular steel disk, which are then integrally formed by a sintering of a super abrasive grain layer and a spot welding at predetermined locations on the outer periphery edge between the disks. Thus, the substrate is substantially configured by the steel disks of three-layered structure, so that the sufficient rigidity is secured. As a result, the vibration accompanied by the high-speed rotation of the electric tool is suppressed, and the noise prevention effect can be also expected. However, the structure of the substrate is complicated. Also, due to not only the cost problem but also the overall thickness of the blade, the saw blade is not appropriate for the precise cutting of the super rigid material such as porcelain tile.

In the diamond cutter suggested in JP-A-2003-80464, the substrate itself is integrally configured. The shallow recess having a doughnut shape is concentrically provided adjacent to the super abrasive grain layer, which is provided on the outer periphery edge of the substrate. Thereby, the rubbing of the cutting object material and the substrate, i.e., the body rubbing, which is also the cause of the cutter vibration, is effectively suppressed. However, since the overall thickness of the substrate is increased, the thickness of the cutter is also increased. Hence, the diamond cutter has a problem which has not been solved yet, so as to cut the super rigid material such as porcelain tile with high precision.

Also, according to the diamond cutter disclosed in JP-A-2002-205274, as can be seen from an embodiment thereof, regarding the thickness of the super abrasive grain layer, a part adjacent to the outer periphery edge of the circular substrate to which the super abrasive grain layer is attached is made to be slightly thicker and the inner part thereof is made to be thicker that the part, so that the rigidity of the substrate is kept and the superior precision is kept when the diamond cutter is provided for the cutting process such as porcelain tile. However, for a cutting object material having a relatively large thickness, the inner part of the substrate made to be slightly thicker than the super abrasive grain layer becomes an obstacle and is contacted to the cutting object material, so that an edge break (so called chipping) occurs on a cutting face. Also, since the attachment of the diamond cutter to the main shaft (spindle) of the electric tool is performed by the contact of the steels, the heat accompanied by the high-speed rotation of the electric tool is directly transferred to the diamond cutter substrate, so that the vibration is caused. Also, the total weight of the substrate also becomes an obstacle to the operation. That is, the diamond cutter has the technical problems that should be further solved.

### SUMMARY OF THE INVENTION

The present invention has been made to solve the above problems. When a saw blade, which includes a circular substrate and a super abrasive grain layer provided to an outer periphery edge of the circuit substrate, is mounted to an electric tool such as disk grinder so as to cut a hard brittle material such as stones and various building materials, one of vibration causes of the saw blade accompanied by the high-speed rotation of the electric tool is heating of the saw blade, Thus, as a result of intensive investigations, considering the fact that the heating of the spindle accompanied by the high-speed rotation of the electric tool affects the heating of the saw blade, the inventors found that it is possible to prevent the heating of the saw blade substrate and to considerably reduce the vibration of the saw blade by suppressing thermal transfer from the electric tool spindle as much as possible. That is, the present invention is to provide a low vibration-type saw blade which can effectively reduce a burden of an operator and enables a desired cutting process with high precision by excellent cutting performance when it is provided for grinding process of the hard brittle material such as stones and various building materials, particularly super rigid material such as porcelain tile.

In order to achieve the above objective, there is provided a low vibration-type saw blade comprising: a circular steel substrate having a center hole at a central portion thereof; a super abrasive grain layer which includes diamond abrasive grains or CBN abrasive grains and is continuously formed to an outer periphery edge of the steel substrate; and a pair of male and female flanges which are made of a fiber reinforced plastic and have an attachment hole to an electric tool spindle at a central portion, and which are integrally provided on a substantial half part of the steel substrate in a direction toward an outer periphery thereof through the center hole provided at the center portion of the steel substrate such that the male and female flanges sandwich the steel substrate from both side faces thereof.

In the above low vibration-type saw blade, the male and female flanges may be formed of the fiber reinforced plastic including glass fibers.

In the above low vibration-type saw blade, a plate thickness of the circular steel substrate may be within a range of 0.4 to 1.0 mm.

According to the above configuration, the center hole of the steel substrate is not an attachment hole which enables direct attachment to the electric tool spindle. The male and female flanges made of fiber reinforced plastics for sandwiching the steel substrate from left and right side faces thereof are fitted through the center hole and are thus integrated with the steel substrate. The attachment to the electric tool spindle is performed by an attachment hole which is formed at a center of the outer flange.

Also, according to the above configuration where the saw blade is reinforced by the flanges of the fiber reinforced plastic, it is possible to make the steel substrate itself thinner considerably, compared to the conventional saw blade, and also to make the super abrasive grain layer provided to the outer periphery edge of the substrate thinner, so that it is possible to keep the sufficient rigidity while realizing the thinning and weight-reducing of the saw blade at the same time. Also, the super abrasive grain layer becoming a cutting blade is made to be thin, so that it is possible to easily cut the cutting object material made of the super hard brittle material such as porcelain tile and to prevent the chipping phenomena such as edge break and crack of the cutting surface of the cutting object material, thereby securing the cutting surface of high precision. Also, since the above-described saw blade is mounted to the electric tool through the attachment hole, which is formed at the central portion of the flange made of the fiber reinforced plastic, without the direct contact of the steel substrate to the electric tool spindle, the transfer of the heat of the electric tool spindle, which is caused due to the high-speed rotation thereof, to the substrate is remarkably suppressed, so that it is possible to considerably reduce the vibration of the saw blade due to the heating of the substrate.

In the meantime, the flange of the fiber reinforced plastic effectively suppresses the vibration of the disk-shaped steel substrate, which is formed as thin as possible, and also functions as a washer upon the attachment to the electric tool spindle. When a thickness of the flange is increased, the deficiency of a thread engagement upon engagement of the saw blade to the electric tool spindle may be caused and thus the strong engagement may not be secured. Thus, it is required to make the flange as thin as possible. However, when the flange is made to be thin, the strength is deficient, so that the effect of the vibration suppression is also deteriorated. In order to reinforce the strength, as a result of various investigations, the inventors found that the strength is sufficiently reinforced by including glass fiber in the fiber reinforced plastics, and thus the desired effect can be obtained.

When the low vibration-type saw blade is configured as described above is mounted to the portable electric tool such as disk grinder so as to cut the super rigid material such as porcelain tile, the flanges of the fiber reinforced plastic which sandwich the saw blade substrate to cover the substantial half part of the substrate from left and right side faces reinforce the rigidity of the substrate and the mounting to the electric tool is made through the attachment holes of the flanges. Thereby, it is possible to beforehand prevent the heat of the spindle, which is generated as the electric tool is rotated at high speed, from being directly transferred to the substrate of the saw blade and to effectively suppress the vibration of the substrate due to the high-speed rotation of the electric tool and the heating of the substrate. Hence, it is possible to remarkably suppress the burden of the operator and to continue the cutting operation with high precision.

### BRIEF DESCRIPTION OF THE DRAWINGS

In the accompanying drawings:
FIG. 1 is a front view showing a saw blade having a flange according to an illustrative embodiment of the present invention;
FIG 2 is a side sectional view taken along a line A-B of FIG. 1;
FIG. 3 is a side view showing a pair of flanges in a separated state;
FIG. 4 is a sectional view of a male flange;
FIG 5 is a front view of the male flange;
FIG. 6 is a sectional view of a female flange which is fitted to the male flange; and
FIG. 7 is a front view of the female flange.

### DETAILED DESCRIPTION

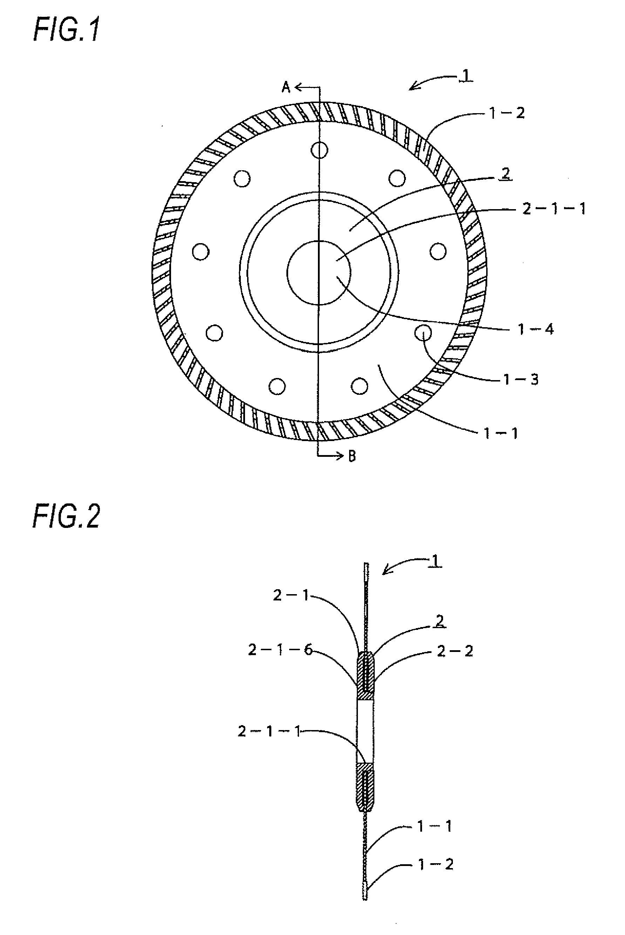

Hereinafter, an illustrative embodiment of the present invention will be more specifically described with reference to FIGS. 1 to 7.

As shown in FIGS. 1 and 2, a saw blade 1 according to an illustrative embodiment of the present invention is a so-called rim-type saw blade 1 where a super abrasive grain layer 1-2 which is obtained by mixing diamond, abrasive grains and a binder in a predetermined ratio and then sintering the same, is continuously provided to an outer periphery edge of a circular steel substrate 1-1. In this illustrative embodiment, a center hole 1-4 is pre-formed at a shaft center of the steel substrate 1-1, and separate flanges 2 sandwiches the substrate 1-1 from left and right side faces of the substrate through the center hole 1-4 and is then integrally attached thereto, so that the saw blade 1-1 having a flange is configured.

In this illustrative embodiment, the steel substrate 1-1 is formed by punching process on a tool steel having a plate thickness of 0.7 mm to form the center hole 1-4 having an outer diameter of 96 mm at the central portion thereof, into which a fitting part of the flange 2 is inserted. A pair of male and female flanges 2 are integrally attached through the center hole 1-4 so that the flanges sandwich a substantially half part of the substrate 1-1 from the center to an outer periphery direction from left and right side faces thereof, thereby reinforcing stiffness of the substrate 1-1 having the plate thickness of 0.7 mm, which is very thin.

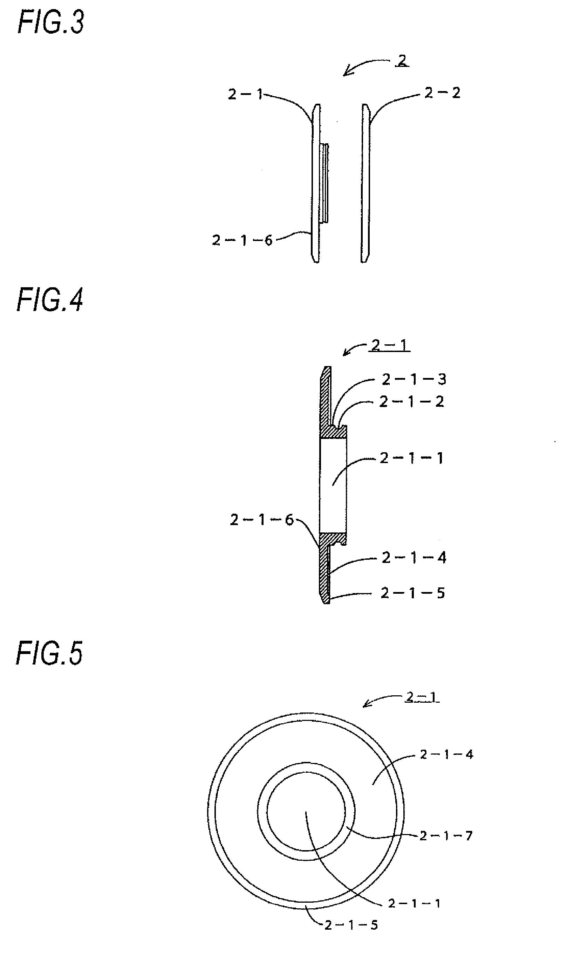

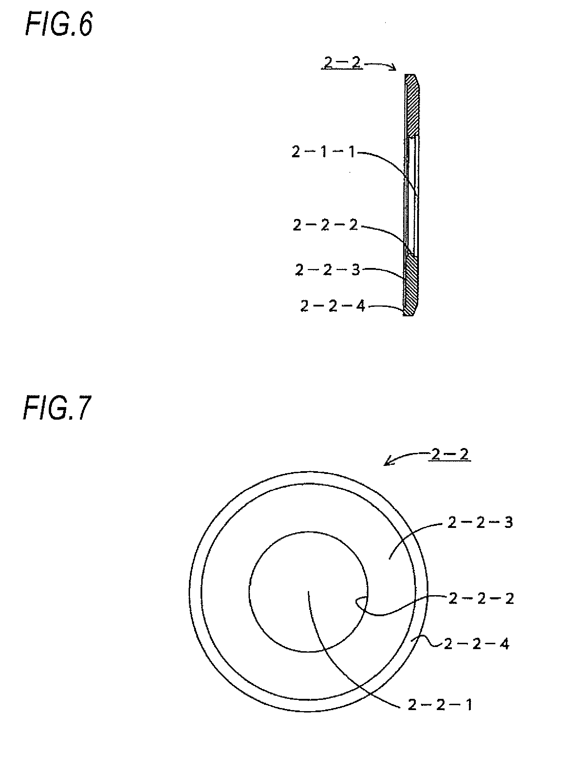

FIG. 3 is a side view showing a state where the male and female flanges 2 are separated. The flange 2 has a male flange 2-1 and a female flange with the saw blade 1 being interposed therebetween. As shown in FIG. 4 (sectional view) and FIG 5 (front view), the male flange 2-1 has a tool receive part 2-1-6 for receiving an electric tool (not shown) at a back side, and is located at an inner side, i.e. at an electric tool-side. As shown in FIG. 6 (sectional view) and FIG. 7 (front view), the female flange 2-2 is located at an outer side, i.e., at an engaging bolt-side of an electric tool spindle. The flange 2 configured by the pair of the male and female flanges is integrated with the substrate 1-1 by sandwiching the substrate 1-1 between the male and female flanges, so that the saw blade 1 is completed. When attaching the saw blade to the electric tool, the saw blade is engaged via a wheel washer and a wheel nut provided to the electric tool. In this illustrative embodiment, the male and female flanges 2 are formed by injection molding with using fiber reinforced plastic including glass fibers. By adopting the glass fibers as a fiber reinforced resin material, the strength is reinforced and the thickness of the flange 2 can be made to be thin to the minimum, so that it is possible to prevent the deficiency of a thread engagement when engaging the saw blade 1 to the electric tool spindle and to thus secure the strong engagement. Also, the flange is interposed between the electric tool spindle and the steel substrate, so that it prevents the direct contact of the spindle and the substrate. As a result, it is possible to suppress the vibration, which is generated because the heat of the spindle, which is caused as the spindle is rotated at high speed, is transferred to the substrate of the saw blade 1. Also, the mass productivity is improved by the injection molding of the flange 2, so that the manufacturing cost of the flange 2 can be remarkably reduced.

FIG. 4 is a side sectional view of the male flange 2-1 according to the illustrative embodiment of the present invention, and FIG. 5 is a front view thereof. The male flange 2-1 includes a spindle engaging hole 2-1-1 for engagement to a main shaft (spindle) of the electric tool via the wheel washer (not shown) at a central portion. Also, the male flange 2-1 includes the tool support part 2-1-6 at a back face located at the electric tool-side, a recess part 2-1-4 functioning as an interference upon engagement to the electric tool at a front face opposite to the back side, and a substrate center hole insertion part 2-1-2 having a fitting recess 2-1-3 which continues from the recess paint 2-1-4 and is used when the male flange is fitted into the corresponding female flange 2-2.

In the meantime, FIG. 6 is a side sectional view of the female flange 2-2 corresponding to the male flange 2-1. The female flange 2-2 includes, at a central portion thereof, a fitting hole 2-2-1 which accommodates the substrate center hole insertion part 2-1-3 of the male flange 2-1 with the substrate 1-1 being interposed between the female flange 2-2 and the male flange 2-1. The fitting hole 2-2-1 includes, at one end, a fitting convex part 2-2-2 corresponding to the fitting recess 2-1-3 formed at the substrate center hole insertion part 2-1-2 of the male flange 2. A part of the female flange 2-2 corresponding to the substrate 1-1-side of the male flange 2-1 is formed with a recess pat 2-2-3, like the recess part 2-1-4 of the male flange 2-1, which functions as an interference upon engagement to the electric tool, and a spring effect thereof contributes to the strong engagement of the saw blade 1 to the electric tool.

That is, the flange 2 has the male flange 2-1 provided at the electric tool-side and the female flange 2-2 provided at the outer side with the substrate 1-1 being interposed therebetween. The fitting recess 2-1-3, which is formed at the substrate center hole insertion part 2-1-2 of the male flange 2-1, and the fitting convex part 2-2-2, which is formed at the fitting hole 2-2-1 of the female flange 2-2, are fitted to sandwich the substrate 1-1 therebetween from left and right side faces of the substrate and are integrally configured to cover about 1/2 part of the substrate 1-1 from the central portion in the outer periphery direction, so that the low vibration-type saw blade according to the illustrative embodiment of the present invention is provided.

In the meantime, the following test was conducted. The saw blade where the thickness of the substrate obtained in the above illustrative embodiment is 0.7 mm and the outer diameter including the super abrasive grain layer is 105 nm was prepared. A saw blade having the flange where the flange of the illustrative embodiment is attached through the center hole of the saw blade and a saw blade having no flange attached thereto were attached to a portable electric tool having a revolution of 12,000/min and were then subject to a plurality of cutting tests in which the porcelain tile was used as a cutting object material and vibration width of the saw blades were measured. As a result, while an average of the vibration width of the saw blade having no flange was 0.44 mm, an average of the vibration width of the saw blade having the flange according to the illustrative embodiment of the present invention was 0.23 mm. That is, it was confirmed that the load on the cutting operation of the operator was considerably reduced.

## Claims

1. A low vibration-type saw blade comprising:
a circular steel substrate having a center hole at a central portion thereof;
a super abrasive grain layer which includes diamond abrasive grains or CBN abrasive grains and is continuously formed to an outer periphery edge of the steel substrate; and
a pair of male and female flanges which are made of a fiber reinforced plastic and have an attachment hole to an electric tool spindle at a central portion, and which are integrally provided on a substantial half part of the steel substrate in a direction toward an outer periphery thereof through the center hole provided at the center portion of the steel substrate such that the male and female flanges sandwich the steel substrate from both side faces thereof.

2. The low vibration-type saw blade according to claim 1,
wherein the male and female flanges are formed of the fiber reinforced plastic including glass fibers.

3. The low vibration-type saw blade according to claim 1 or 2,
wherein a plate thickness of the circular steel substrate is within a range of 0.4 to 1.0 mm.
